**Europäisches Patentamt**

**European Patent Office**

**Office européen des brevets**

(11) Numéro de publication: **0 227 527**
**B1**

(12) **FASCICULE DE BREVET EUROPEEN**

(45) Date de publication du fascicule du brevet:
03.10.90

(21) Numéro de dépôt: 86402604.2

(22) Date de dépôt: **24.11.86**

(51) Int. Cl.⁵: **H01G 9/08,** H01G 13/00

(54) Procédé pour la fabrication d'un condensateur au tantale à électrolyte solide sans fil ni ruban de sortie, dispositif adapté à sa mise en oeuvre, et condensateur ainsi obtenu.

(30) Priorité: **25.11.85 FR 8517382**

(43) Date de publication de la demande:
**01.07.87 Bulletin 87/27**

(45) Mention de la délivrance du brevet:
**03.10.90 Bulletin 90/40**

(84) Etats contractants désignés:
**DE GB IT**

(56) Documents cités:
**EP-A- 0 130 001**
**DE-A- 2 703 846**
**US-A- 4 203 194**

**31ST ELECTRONIC COMPONENTS CONFERENCE,**
**Atlanta, Georgia,**
**US, 11-13 mai 1981, pages 294-301, IEEE, New York, US;**
**C. McGRATH: "A new solid tantalum capacitor"**

(73) Titulaire: **SPRAGUE FRANCE, Avenue du Danemark,**
**F-37001 Tours Cedex(FR)**

(72) Inventeur: **Gouvernelle, Didier Michel Pierre, 6, rue**
**Foulques Nerra, F-37360 Semblancay(FR)**
Inventeur: **Andrepierre, Michel, 29, rue Quillonnière,**
**F-37250 Parcay-Meslay(FR)**

(74) Mandataire: **Santarelli, Marc et al, Cabinet Rinuy et**
**Santarelli 14, avenue de la Grande Armée,**
**F-75017 Paris(FR)**

ACTORUM AG

## Description

La présente invention concerne un procédé de fabrication d'un condensateur au tantale et à électrolyte solide sans fil ni ruban de sortie (parfois appelé condensateur chipse), un dispositif adapté à sa mise en oeuvre, et un condensateur ainsi obtenu.

Ainsi qu'on le sait, un tel condensateur sans fil ni ruban de sortie (ou condensateur chipse) est un composant pour montage en surface (surface mounting component, ou s.m.c., en langue anglaise) qui a la forme d'un barreau court sur les tranches duquel sont déposées deux couches conductrices isolées l'une de l'autre ; l'une de ces couches est reliée électriquement par une tige de tantale à un coeur poreux de tantale recouvert d'une couche diélectrique d'oxyde, tandis que l'autre de ces couches est en contact électrique avec une contre-électrode entourant une partie de ce coeur en en étant séparée par une couche d'électrolyte solide. Ce coeur recouvert de sa couche diélectrique et cette contre-électrode sont, entre ces couches conductrices, enrobées dans un bloc de résine isolante, en résine époxy le plus souvent.

Un tel condensateur chipse, et son procédé de fabrication, sont notamment décrits dans le brevet US-4.203.194. La contre-électrode y est composite, formée d'une couche de graphite recouverte d'une couche de peinture à l'argent ayant subi une cuisson, et les couches conductrices terminales sont constituées d'une couche de peinture d'argent ayant subi une cuisson, d'une couche de nickel et d'une couche de soudure. Sa fabrication commence par la préparation d'une pastille poreuse en tantale présentant deux faces terminales et une paroi latérale. A l'une de ces faces terminales, appelée face supérieure, est fixée une tige de tantale reliée à une barre servant à supporter un lot de pastilles. Une couche diélectrique de pentoxyde de tantale est formée, par anodisation, sur cette pastille et sur cette tige puis un film de résine fluorocarbonée ("TEFLON") est déposé sur la tige jusqu'à proximité de la pastille. La pastille est ensuite imprégnée d'une solution de nitrate de manganèse qui, par pyrolyse, donne une couche de dioxyde de maganèse formant électrolyte solide. La couche de résine, non mouillable par la solution de nitrate de manganèse, empêche la remontée de cette dernière le long de la tige.

Une contre-électrode est ensuite déposée par un procédé connu sur le fond de la pastille (à l'opposé de la face à laquelle est fixée la tige) et sur la majeure partie de sa paroi latérale. On dépose sur la face supérieure un capuchon en résine époxy recouvrant le pied de la tige et une partie de la couche précitée de résine fluorocarbonée. On met à nu, par sablage, un tronçon de la tige au-dessus de ce capuchon. On suspend ensuite ces pastilles dans un lit fluidisé de résine époxy fusible et, par attraction électrostatique, on forme une couche de cette poudre sur les pastilles. On met à nu, par soufflage, le fond de la contre-électrode et la zone de la tige préalablement mise à nu par sablage, puis on fait fondre et on cuit la couche restante de poudre. On dépose alors, par application et immersion, les couches conductrices composites (peinture d'argent- nickel-soudure). Les tiges sont alors coupées au ras de la couche de soudure avoisinante par un laser qui, par chauffage local, provoque le recouvrement, par de la soudure, de la tranche ainsi mise à nu du tronçon de tige lié à la pastille de tantale.

Un tel procédé, qui donne toute satisfaction encore aujourd'hui, présente toutefois l'inconvénient d'aboutir à des condensateurs de forme irrégulière du fait du contrôle malaisé de l'épaisseur de la couche de résine époxy et de la protubérance formée par la tige sur la face supérieure. D'autre part, il nécessite des opérations de sablage et de soufflage qui doivent être effectuées avec une grande précision.

La présente invention a pour objet de permettre l'obtention de condensateurs de forme aussi régulière que possible grâce à un bon contrôle de la forme de la couche isolante de résine époxy et/ou la suppression de la protubérance due à la tige de tantale.

L'invention a également pour objet d'avoir un bon contact électrique entre la tranche libre du tronçon de tige liée à la pastille de tantale et la couche conductrice terminale associée.

L'invention a encore pour objet de produire sans immersion ces couches conductrices terminales.

L'invention propose à cet effet un procédé de fabrication d'un condensateur au tantale et à électrolyte solide, du type sans fil ni ruban de sortie, selon lequel on prépare un corps poreux de tantale prolongé sur une face par une tige de tantale, on forme une couche diélectrique recouvrant ce corps et cette tige, on dépose une couche d'électrolyte solide sur ce corps et sur une partie de la tige, et on dépose une couche de contre-électrode sur une partie de cette couche d'électrolyte solide, on enrobe l'ensemble dans un manchon en matière électriquement isolante en laissant à nu une portion de la contre-électrode et on dépose des couches conductrices terminales isolées l'une de l'autre, respectivement en contact avec la tige et la contre-électrode, caractérisé en ce que avant le dépôt des couches terminales, l'on forme par moulage ledit manchon en masquant ladite portion de la couche de contre-électrode en sorte d'en empêcher tout recouvrement. Le dépôt par moulage de la couche isolante permet un bon contrôle de la forme de cette dernière, indépendamment de la forme même de la pastille et de sa régularité.

Le dépôt par moulage d'un tel manchon isolant autour du corps d'anode est en soi déjà connu du document EP- 0 130 001, mais dans un procédé différent dans lequel les couches conductrices terminales sont des pattes obtenues par découpe d'un cadre de connexion ("lead frame" en anglais) puis pliées, avant la formation par moulage d'une masse isolante dans l'espace délimité par ces pattes, autour du corps d'anode.

Selon une disposition préférée de l'invention, on coupe la tige de tantale aussitôt après le moulage, au ras de la couche isolante, ce qui permet de réduire très sensiblement la protubérance à laquelle le tronçon résiduel de tige donne lieu. Sur la tranche de ce tronçon de tige est déposée une couche conductrice d'accrochage, de préférence à base de nickel, or un contact tantale-nickel est de très bonne qualité. Il peut s'agir d'une petite masse de nickel ne recouvrant que la tranche de la tige, déposée par électrodéposition, les couches terminales étant ensuite formées par dépôt d'argent, dépôt électrochimique de nickel et pulvérisation cathodique d'une couche extérieure (or, alliage, cuivre-étain notamment) ou immersion dans un bain d'alliage en fusion à base d'étain. De façon préférée, l'invention préconise toutefois que les couches terminales ne comportent qu'une couche de nickel (déposée par pulvérisation cathodique) et une couche extérieure (déposée par pulvérisation cathodique ou par immersion), donc sans couche d'argent.

L'invention propose également un dispositif adapté à la mise en œuvre de ce procédé, caractérisé en ce qu'il comporte un moule formé de deux coquilles adaptées à définir une cavité de moulage fermée par un bloc portant un tampon souple adapté à s'appliquer de façon étanche contre une portion de contre-électrode préalablement déposée sur un corps poreux de tantale recouvert d'une couche d'oxyde et d'une couche d'électrolyte solide. La mise en œuvre d'un tel tampon souple permet un masquage efficace du fond de la contre-électrode vis-à-vis de la matière isolante de moulage. De façon préférée, ce module comporte des demi-coquilles s'affrontant selon une surface perpendiculaire aux faces de la pastille, le tampon souple étant monté, dans l'une de ces demi-coquilles, mobile parallèlement à cette surface sous l'action de rampes complémentaires respectivement solidaires de ce tampon et d'un bloc de fermeture porté par l'autre de ces demi-coquilles en pouvant y coulisser perpendiculairement à cette surface.

L'invention propose également un condensateur au tantale et à électrolyte solide adapté à être mis en œuvre par le procédé, du type sans fil ni ruban de sortie, du genre comportant un corps poreux en tantale prolongé par une tige, une couche diélectrique recouvrant ce corps et cette tige, une couche d'électrolyte solide recouvrant ce corps et une partie de cette tige, une contre-électrode isolée vis-à-vis de cette tige et recouvrant une partie de ce corps, un manchon isolant recouvrant cette tige, ce corps et une partie de la contre-électrode et deux couches conductrices terminales isolées l'une de l'autre, respectivement reliées à la tige et à la contre-électrode, caractérisé en ce que la tige a une tranche qui affleure une face sensiblement plane du manchon isolant et vient en contact avec l'une des couches conductrices terminales. Cette face sensiblement plane est aisément obtenue selon le procédé précité. Cela permet l'obtention d'une couche terminale de bonne planéité. Ce condensateur a de préférence une section constante avantageusement parallélépipédique.

Les objets, caractéristiques et avantages de l'invention ressortent de la description qui suit, donnée à titre d'exemple illustratif non limitatif, en regard des dessins annexés sur lesquels:

– la figure 1 est une vue en coupe axiale d'un condensateur conforme à l'invention selon un premier mode de réalisation,

– la figure 2 est une vue en coupe axiale d'un condensateur conforme à l'invention selon un second mode de réalisation,

– la figure 3 est une vue en coupe d'un moule adapté à la mise en œuvre du procédé de l'invention; et

- les figures 4A et 4B sont des vues en coupe d'un détail du moule de la figure 3 en configurations respectivement ouverte et fermée.

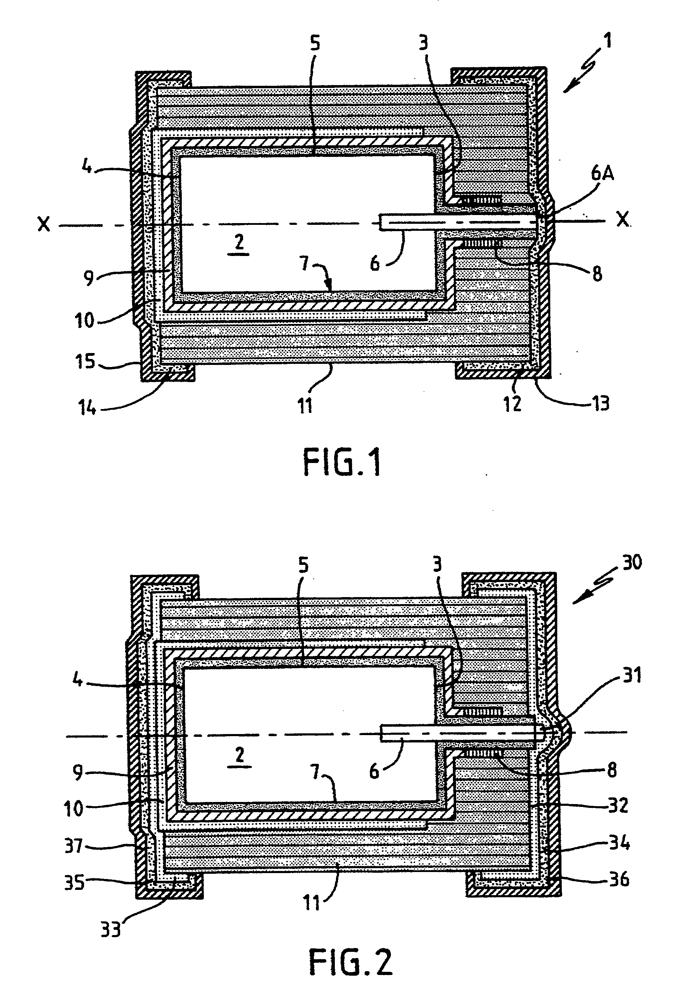

La figure 1 présente un condensateur 1 selon une forme préférée de réalisation.

Ce condensateur comporte un corps ou coeur poreux en tantale 2 ayant un axe de symétrie X-X. Il a la forme d'un barreau court terminé par deux faces transversales 3 et 4 reliées par une paroi latérale 5. A l'une 3 des faces de ce barreau (celle de droite à la figure 1) est rapportée une tige de tantale 6 sensiblement alignée sur l'axe X-X.

Par convention, on qualifiera d'"anodique" tout ce qui, dans la suite du texte, sera du côté de cette face 3 et de la tige 6, tandis qu'on qualifiera de "cathodique" ce qui sera du côté de la face 4, c'est-à-dire à l'opposé axialement de la tige 6.

Ce coeur et cette tige sont recouverts d'une couche diélectrique de pentoxyde de tantale 7. Cette tige est recouverte sur une portion intermédiaire de sa longueur, par une couche 8 de résine fluorocarbonée de type "TEFLON". Le coeur 2 est recouvert par une couche de dioxyde de mangenèse 9 qui se poursuit jusqu'au bord de cette courte couche de "TEFLON". La face cathodique du coeur de tantale est recouverte d'une contre-électrode 10 qui se prolonge axialement sur la quasi-totalité de la paroi latérale 5 de ce coeur. Ce coeur est enrobé sur sa face latérale 5 et sur sa face anodique par une matière isolante 11 qui enrobe également la tige 6 sur toute sa longueur mais qui ne couvre pas la face cathodique de la contre-électrode 10. Cette matière isolante, qui est de préférence une résine époxy, constitue un manchon de section globale constante transversalement à l'axe X-X. Sur sa face anodique ce manchon 11 est recouvert d'une couche de nickel 12 sensiblement plane, qui est en contact avec la tranche 6A de la tige 6 et se prolonge sur une courte distance le long de la paroi latérale de ce manchon ; cette couche 12 de nickel est à son tour recouverte par une couche extérieure 13 sensiblement plane en alliage de soudure, en or ou en alliage Cu-Sn, et qui se prolonge de même axialement sur la couche de nickel. De manière analogue la face cathodique de la contre-électrode 10 est recouverte par une couche 14 de nickel et une couche extérieure 15, sensiblement planes, qui se prolongent transversalement puis axialement, sur une courte distance, le long du manchon 11.

Le procédé de fabrication de ce condensateur comporte, de manière connue, une étape de préparation par frittage du coeur 2 puis de fixation, par soudage en pratique, de la tige 6 (qui est à ce moment plus longue qu'à la figure 1), puis une étape d'anodiation pour former la couche diélectrique 7. On dépose ensuite la courte couche 8 qui peut être, de façon générale, en toute matière non mouillable par une solution de nitrate de manganèse. On imprègne le coeur anodisé 2 dans une telle solution puis on procède à une pyrolyse. On dépose ensuite la contre-électrode.

Ces étapes sont classiques et ne seront pas détaillées ici plus avant. On peut par exemple se référer au brevet US-4.203.194 déjà cité.

Selon l'invention, on dépose ensuite par moulage le manchon 11 de matière isolante, en masquant la face cathodique de la contre-életrode pour en empêcher tout recouvrement.

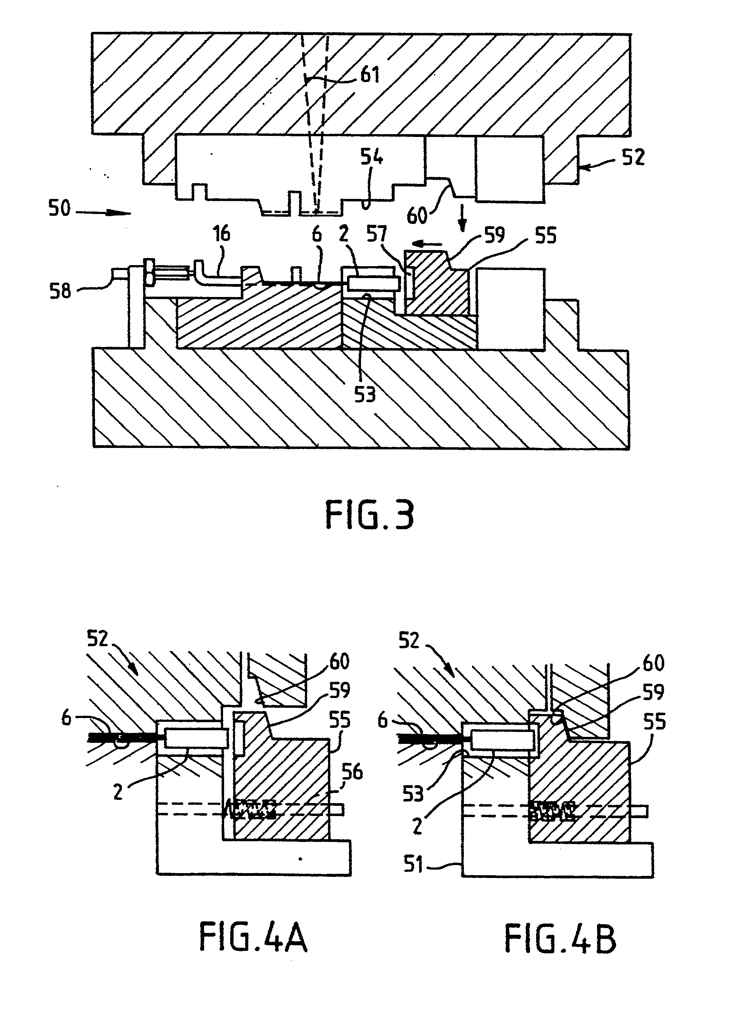

Les figures 3 et 4A-4B représentent un moule 50 adapté à réaliser un tel moulage.

Ce moule 50 est composé de deux coquilles 51 et 52 adaptées à s'affronter selon des surfaces globalement parallèles à l'axe X-X.

Les corps en tantale (ou pastilles) sont généralement reliées par les tiges 6 à une barre-support 16 qui a ici une section en cornière. L'une 51 des demi-coquilles comporte des empreintes adaptées à recevoir la barre-support 16 (perpendiculairement au plan de la figure 3) et les tiges 6 des diverses pastilles 2 rapportées à cette barre. Chacune de ces pastilles 2 est maintenue en porte-à-faux dans une cavité de moulage 53 ménagée dans le moule inférieur 51, adaptée à être fermée par le dessus par une empreinte 54 ménagée sur la coquille supérieure 52. Dans cette coquille inférieure 51 est monté un bloc coulissant 55 adapté à coulisser axialement le long d'organes 56 de guidage (voir les figures 4A et 4B). Ce bloc comporte un tampon souple 57, par exemple en résine silicone RTV (commercialisée par la Société RHONE POULENC) adapté à venir en appui contre la face cathodique de la pastille 2, sur sa contre-électrode plus précisément. Des éléments de butée 58 (à billes par exemple) sont disposés en regard de la barre-support 16 pour assurer un appui satisfaisant du tampon souple 57 contre chacune des pastilles 2. Le bloc coulissant 55 est muni d'une rampe 59 adaptée à coopérer avec une rampe 60 ménagée sur un bloc de fermeture porté par la coquille 52 et mobile transversalement.

Lors d'un abaissement de ce bloc de fermeture, après rapprochement des coquilles 51 et 52 transversalement à l'axe X–X, ces rampes provoquent le coulissement du bloc 55 jusqu'à presser le tampon 57 contre la pastille 2 associée (voir figures 4A et 4B). On procède alors à une injection de matière isolante par un canal d'injection 61 qui débouche dans la cavité de moulage définie par la cavité 53, l'empreinte 54 et le bloc 55. La pression du tampon souple 57 contre la contre-électrode de chaque pastille empêche tout recouvrement de cette dernière par la matière isolante.

Après démoulage, on procède à une coupure de la tige 6 au ras du manchon d'enrobage en sorte de ne plus laisser que le tronçon représenté à la figure 1.

On procède ensuite à des opérations de métallisation consistant à établir un contact positif sur la tranche du tronçon résiduel de tige 6 et un contact négatif sur la face cathodique de la contre-électrode. On effectue avantageusement ces métallisations par pulvérisation cathodique d'une couche de nickel puis d'une couche extérieure. Les couches de nickel 12 et 14, qui constituent des couches d'accrochage sur le manchon isolant et de contact avec la tige 6 ou la contre-électrode peuvent, en variante, être réalisées à l'aide de tout métal ayant des affinités de liaison avec la matière constitutive du manchon 11 (nickel, mais aussi chrome ...). Elles ont de préférence une épaisseur de 300 à 500 • $10^{-10}$ m (300 à 500 Angstrom).

Une deuxième couche conductrice plus épaisse est avantageusement superposée à cette première couche (par exemple du cuivre sur quelques microns d'épaisseur) sous la couche extérieure de terminaison.

La figure 2 illustre un condensateur 30 selon une autre variante de réalisation de l'invention. Ce condensateur 30 comporte, comme celui de la figure 1, un cœur 2 bordé par des faces 3, 4 et 5, une tige 6 terminée par une tranche 6A, une couche diélectrique 7, une courte couche 8 sur la tige, une couche 9 d'électrolyte solide, une contre-électrode 10 et un bloc isolant 11.

Ce condensateur 30 se distingue du condensateur 1 de la figure 1 par la présence d'une capsule de nickel 31 sur la tranche 6A de la tige 6 et de couches 32 et 33 de métallisation d'argent recouvrant les faces anodique et cathodique du corps 2 muni de son manchon et de sa contre-électrode 10. Ces couches d'argent sont, comme à la figure 1, recouvertes de couches 34 et 35 de nickel et de couches extérieures 36 et 37. La présence de la capsule 31 se traduit par une légère protubérance.

Le procédé de fabrication de ce condensateur 30 est fort similaire de celui décrit à propos de la figure 1, à ceci près que, après le démoulage, on procède au dépôt de la capsule 31 de nickel, de préférence par électrodéposition (ou dépôt électrolytique). On procède ensuite au dépôt de couches époxy à l'argent, puis de couches de nickel par électrodéposition ou pulvérisation, puis de couches terminales (de préférence par électrodéposition ou immersion).

En variante non représentée, la partie cathodique est réalisé comme celle de la figure 1, sans couche à l'argent.

La constitution des diverses couches peut être l'objet de variantes, les matériaux indiqués ci-dessus constituant toutefois des choix préférentiels.

**Revendications**

1. Procédé de fabrication d'un condensateur au tantale et à électrolyte solide, du type sans fil ni ruban de sortie, selon lequel on prépare un corps poreux (2) de tantale prolongé sur une face (3) par une tige de tantale (6), on forme une couche diélectrique (7) recouvrant ce corps et cette tige, on dépose une couche (9) d'électrolyte solide sur ce corps et sur une partie de la tige, et on dépose une couche (10) de contre-électrode sur une partie de cette couche d'électrolyte solide, on enrobe l'ensemble dans un manchon (11) en matière électriquement isolante en laissant à nu une portion de la contre-électrode et on dépose des couches conductrices terminales (12-13 ; 14-15 ; 32, 34, 36-33, 35,37) isolées l'une de l'autre, respectivement en contact avec la tige (6) et la contre-électrode (10), caractérisé en ce que avant le dépôt des couches terminales l'on forme par moulage ledit manchon (11) en masquant ladite portion de la couche de contre-électrode (10) en sorte d'en empêcher tout recouvrement.

2. Procédé selon la revendication 1, caractérisé en ce que l'on coupe la tige (6) au ras du manchon isolant (10) avant de déposer lesdites couches conductrices, le contact de ces derniers avec la tige (6) se faisant par sa tranche (6A) mise à nu par l'opération de coupe.

3. Procédé selon la revendication 2, caractérisé en ce que la couche conductrice en contact avec la tranche (6A) de la tige est obtenue par électrodéposition d'une capsule conductrice d'accrochage (31), dépôt d'une couche à l'argent (32), dépôt électrochimique d'une couche de nickel (34) puis dépôt d'une couche extérieure (36).

4. Procédé selon la revendication 2, caractérisé en ce que la couche conductrice en contact avec la tranche (6A) de la tige est obtenue par pulvérisation cathodique d'une couche conductrice d'accrochage (12) puis dépôt d'une couche conductrice extérieure (13).

5. Procédé selon l'une quelconque des revendications 1 à 4, caractérisé en ce que la couche conductrice terminale en contact avec la couche de contre-électrode est obtenue par pulvérisation cathodique d'une couche conductrice d'accrochage (14) puis dépôt d'une couche extérieure (15).

6. Procédé selon l'une quelconque des revendications 3 à 5, caractérisé en ce que la matière conductrice d'accrochage est du nickel.

7. Dispositif de fabrication d'un condensateur au tantale à électrolyte solide, du type sans fil de sortie adapté à la mise en œuvre du procédé selon l'une quelconque des revendications 1 à 6, caractérisé en ce qu'il comporte un moule (50) formé de deux coquilles adaptées à définir une cavité de moulage fermée par un bloc (55) portant un tampon souple (57) adapté à s'appliquer de façon étanche contre une portion de contre-électrode (10) préalablement déposée sur un corps poreux (2) de tantale recouvert d'une couche d'oxyde (7) et d'une couche d'électrolyte solide (9).

8. Dispositif selon la revendication 7, caractérisé en ce que ledit bloc (55) est monté coulissant sur l'une (51) des coquilles et comporte une rampe (59) adaptée à forcer le coulissement de ce corps par coopération avec une rampe (60) portée par l'autre (52) des coquilles.

9. Condensateur au tantale et à électrolyte solide, du type sans fil ni ruban de sortie adapté à être obtenu selon le procédé de l'une quelconque des revendications 1 à 6, du genre comportant un corps poreux (2) en tantale prolongé par une tige (6), une couche diélectrique (7) recouvrant ce corps et cette tige, une couche d'électrolyte solide (9) recouvrant ce corps et une partie de cette tige, une contre-électrode (10) isolée vis-à-vis de cette tige, et recouvrant une partie de ce corps, un manchon isolant (11) recouvrant cette tige, ce corps et une partie de la contre-électrode et deux couches conductrices terminales (12-15; 32-37) isolées l'une de l'autre, respectivement reliées à la tige (6) et à la contre-électrode (10), caractérisé en ce que la tige a une tranche qui affleure une face sensiblement plane du manchon isolant (11) et vient en contact avec l'une des couches conductrices terminales.

10. Condensateur selon la revendication 9, caractérisé en ce que le manchon isolant a une section parallélépipédique.

11. Condensateur selon la revendication 9 ou la revendication 10, caractérisé en ce que la couche conductrice en contact électrique avec la tige (6) comporte du nickel en contact avec celle-ci.

## Claims

1. A process for manufacturing a tantalum capacitor having a solid electrolyte, of the kind without wire or outlet ribbon, comprising making a porous tantalum body (2) extended on one face (3) by a tantalum wire (6), forming a dielectric layer (7) covering the body and the wire, depositing a solid electrolyte layer (9 ) on the body and on a part of the wire, depositing a counter electrode layer (10) on a part of this solid electrolyte layer, coating the assembly with a sleeve (11) of electrically insulating material whilst leaving a portion of the counter electrode bare, and then depositing terminal conductive layers (12-13; 14-15; 32, 34; 36-33; 35, 37) insulated from one another and in contact with the wire (6) and the counter electrode (10) respectively, characterized in that, before the deposition of the terminal layers, the said sleeve (11) is formed by moulding in such a way that it masks the said portion of the counter electrode (10) so as to prevent it being coated.

2. A process in accordance with Claim 1, characterized in that the wire (6) is cut close to the insulating sleeve (11) before deposition of the said conductive layers (12, 13), the contact of the latter with the wire (6) being made by the end cross-section (6A) of the wire laid bare by the cutting operation.

3. A process in accordance with Claim 2, characterized in that the conductive layer in contact with the end cross-section (6A) of the wire is obtained by electrodeposition of a conductive clinching cap (31), deposition of a layer of silver (32), electrochemical deposition of a layer of nickel (34) then deposition of an outer layer (36).

4. A process in accordance with Claim 2, characterized in that the conductive layer in contact with the end cross-section (6A) of the wire is obtained by cathodic sputtering of a conductive clinching layer (12) then deposition of an outer layer (13).

5. A process in accordance with any one of Claims 1 to 4, characterized in that the terminal conductive layer in contact with the counter electrode layer is obtained by cathodic sputtering of a conductive clinching layer (14) then deposition of an outer layer (15).

6. A process in accordance with any one of Claims 3 to 5, characterized in that the conductive clinching material is nickel.

7. A device for manufacturing a tantalum capacitor having a solid electrolyte, of the kind without an outlet wire, adapted for using the process in accordance with any one of Claims 1 to 6, characterized in that it comprises a mould (50) formed of two chases adapted to define a moulding cavity closed by a block (55) carrying a flexible pad (57) which is adapted to bear in a sealing manner against a part of the counter electrode (10) previously deposited on a porous tantalum body (2) covered with an oxide layer (7) and a solid electrolyte layer (9).

8. A device in accordance with Claim 7, characterized in that the said block (55) is slidably mounted on one (51) of the chases and comprises a ramp (59) adapted to cause the sliding of this block by cooperating with a ramp (60) on the other (52) chase.

9. A tantalum capacitor having a solid electrolyte, of the kind without wire or outlet ribbon, designed to be produced using a process in accordance with any one of Claims 1 to 6, of the kind comprising a porous tantalum body (2) extended by a wire (6), a dielectric layer (7) covering the body and the wire, a solid electrolyte layer (9) covering the body and a part of the wire, a counter electrode (10) insulated from the wire and covering part of the body, an electrically insulating sleeve (11) covering the wire, the body and a portion of the counter electrode, and two terminal conductive layers (12–15; 32–37) insulated from one another and connected to the wire (6) and the counter electrode (10) respectively, characterized in that the wire has an end which is flush with a substantially planar face of the insulating sleeve (11) and is in contact with one of the terminal conductive layers.

10. A capacitor in accordance with Claim 9, characterized in that the insulating sleeve has a parallelepipedic cross section.

11. A capacitor in accordance with Claim 9 or 10, characterized in that the conductive layer in electrical contact with the wire (6) comprises nickel in contact with the wire.

**Patentansprüche**

1. Verfahren zur Herstellung eines Festelektrolyt-Tantalkondensators ohne Ausführungsdraht oder -band, bei dem ein poröser Körper (2) aus Tantal vorbereitet wird, der auf einer Seite (3) durch einen Tantalstift (6) verlängert ist, eine diesen Körper und diesen Stift umgebende dielektrische Schicht (7) geformt wird, eine Festelektrolytschicht (9) auf diesen Körper und auf einen Teil des Stiftes aufgebracht wird, und eine Gegenelektrodenschicht (10) auf einen Teil dieser Festelektrolytschicht aufgebracht wird, das Ganze in eine Hülle (11) aus elektrisch isolierendem Material eingebracht wird, wobei ein Teil der Gegenelektrode freigelassen wird, und leitende, gegeneinander isolierte Anschlußschichten (12-13; 14-15; 32, 34, 36-33, 35, 37) aufgebracht werden, die mit dem Stift (6) bzw. der Gegenelektrode (10) in Kontakt stehen, dadurch gekennzeichnet, daß vor dem Aufbringen der Anschlußschichten die Hülle (11) durch Formen gebildet wird, indem der Teil der Gegenelektrodenschicht (10) maskiert wird, um eine vollständige Verkleidung zu vermeiden.

2. Verfahren nach Anspruch 1, dadurch gekennzeichnet, daß der Stift (6) in gleicher Höhe mit der isolierenden Hülle (10) geschnitten wird, bevor die leitenden Schichten aufgebracht werden, wobei sich der Kontakt dieser zuletzt genannten Schichten mit dem Stift (6) durch dessen durch den Schnittvorgang freigelegten Rand (6A) ergibt.

3. Verfahren nach Anspruch 2, dadurch gekennzeichnet, daß die mit dem Rand (6A) des Stiftes in Kontakt stehende leitende Schicht erhalten wird durch galvanische Abscheidung einer leitenden Mitnahmekapsel (31), Aufbringen einer Silberschicht (32), elektrochemisches Aufbringen einer Nickelschicht (34) und anschließendes Aufbringen einer Außenschicht (36).

4. Verfahren nach Anspruch 2, dadurch gekennzeichnet, daß die in Kontakt mit dem Rand (6A) des Stiftes stehende leitende Schicht erhalten wird durch kathodische Zerstäubung einer leitenden Mitnahmeschicht (12) und anschließendes Aufbringen einer leitenden Außenschicht (13).

5. Verfahren nach einem der Ansprüche 1 bis 4, dadurch gekennzeichnet, daß die in Kontakt mit der Gegenelektrodenschicht stehende leitende Anschlußschicht erhalten wird durch kathodische Zerstäubung einer leitenden Mitnahmeschicht (14) und anschließendes Aufbringen einer Außenschicht (15).

6. Verfahren nach einem der Ansprüche 3 bis 5, dadurch gekennzeichnet, daß das leitende Mitnahmematerial aus Nickel besteht.

7. Vorrichtung zur Herstellung eines Festelektrolyt-Tantalkondensators ohne Ausführungsdraht zur Durchführung des Verfahrens nach einem der Ansprüche 1 bis 6, dadurch gekennzeichnet, daß sie eine Form (50) umfaßt, die zur Bestimmung eines durch einen Block (55) verschlossenen Formhohlraums aus zwei Schalen gebildet ist, wobei der Block (55) einen nachgiebigen Stopfen (57) trägt, der dicht gegen einen Abschnitt der Gegenelektrode (10) anlegbar ist, die zuvor auf einen porösen Tantalkörper (2) aufgebracht wurde, der von einer Oxydschicht (7) und einer Festelektrolytschicht (9) umgeben ist.

8. Vorrichtung nach Anspruch 7, dadurch gekennzeichnet, daß der Block (55) gleitend auf einer (51) der beiden Schalen angebracht ist und eine Rampe (59) umfaßt, um das Gleiten dieses Körpers durch das Zusammenwirken mit einer von der anderen (52) der Schalen getragenen Rampe (60) zu erzwingen.

9. Festelektrolyt-Tantalkondensator ohne Ausführungsdraht oder -band, der gemäß dem Verfahren nach einem der Ansprüche 1 bis 6 erhalten wird, mit einem durch einen Stift (6) verlängerten porösen Tantalkörper (2), einer diesen Körper sowie diesen Stift umgebenden dielektrischen Schicht (7), einer diesen Körper und einen Teil dieses Stiftes umgebenden Festelektrolytschicht (9), einer diesem Stift gegenüberliegenden isolierten und einen Teil dieses Körpers umgebenden Gegenelektrode (10), einer diesen Stift, diesen Körper und einen Teil der Gegenelektrode sowie zwei gegeneinander isolierte leitende Anschlußschichten (12-15; 32-37) umgebenden isolierenden Hülle (11), wobei die leitenden Anschlußschichten mit dem Stift (6) bzw. der Gegenelektrode (10) verbunden sind, dadurch gekennzeichnet, daß der Stift einen Rand aufweist, der eine Fläche zeigt, die im wesentlichen mit der isolierenden Hülle (11) eben bzw. bündig ist und mit der einen der leitenden Anschlußschichten in Kontakt kommt.

10. Kondensator nach Anspruch 9, dadurch gekennzeichnet, daß die isolierende Hülle einen Parallelepipedon-Schnitt besitzt.

11. Kondensator nach Anspruch 9 oder Anspruch 10, dadurch gekennzeichnet, daß die in elektrischem Kontakt mit dem Stift (6) stehende leitende Schicht mit diesem in Kontakt stehendes Nickel aufweist.

FIG.1

FIG.2

**FIG.3**

**FIG.4A**          **FIG.4B**